Europäisches Patentamt

European Patent Office

Office européen des brevets

(19)

(11) Numéro de publication: **0 265 313 B1**

## FASCICULE DE BREVET EUROPEEN

(12)

(45) Date de publication de fascicule du brevet:
**09.10.91**

(51) Int. Cl.5: **B44C 3/04**, B60R 13/02,
B44C 5/04

(21) Numéro de dépôt: **87402182.7**

(22) Date de dépôt: **30.09.87**

(54) **Procédé de fabrication d'un panneau de garnissage et panneau obtenu par ce procédé.**

(30) Priorité: **16.10.86 FR 8614391**

(43) Date de publication de la demande:
**27.04.88 Bulletin 88/17**

(45) Mention de la délivrance du brevet:
**09.10.91 Bulletin 91/41**

(84) Etats contractants désignés:
**BE DE ES GB IT**

(56) Documents cités:
**FR-A- 2 085 615**
**FR-A- 2 564 772**
**US-A- 4 307 058**
**US-A- 4 501 790**

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Taillefert, Raymond**
**14 rue Emannuel Chabrier**
**F-92390 Villeneuve la Garenne(FR)**
Inventeur: **Philibert, Jean-Claude**
**71 rue du Maréchal de Lattre de Tassigny**
**F-95120 Ermont(FR)**

(74) Mandataire: **Durand, Yves Armand Louis et al**
**Cabinet Z. Weinstein 20, Avenue de Fried-**
**land**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention a essentiellement pour objet un procédé de fabrication d'un panneau de garnissage, tel que par exemple un panneau intérieur de porte de véhicule automobile.

Elle vise également un paneau obtenu par ce procédé.

Actuellement, on cherche à créer sur la face visible des panneaux de porte de véhicule, des effets de style en rapportant sur cette face visible des fragments de matériau de différentes natures, tels que moquette ou tissu, et/ou de différents grains.

Jusqu'à présent, on obtenait ces effets de style en fixant par collage les fragments de moquette et/ou de tissu sur le panneau qui résultait généralement d'un assemblage de plusieurs parties.

Mais les diverses opérations d'assemblage et de collage présentaient une certaine complication et étaient, comme on le comprend, longues à effectuer, et par conséquent coûteuses.

On a également proposé dans le document US-A-4.307.058 de former par le vide une plaque de matériau décoratif et de placer cette plaque dans une cavité adaptée de moulage par injection, où un support sera réalisé et fixé directement sur la plaque préformée.

Mais un tel procédé exige des opérations de manipulation qui sont plus ou moins longues et délicates et le rendent coûteux.

La présente invention a pour but de pallier ces inconvénients en proposant notamment un procédé de fabrication d'un panneau de garnissage qui demeure particulièrement simple et économique.

A cet effet, l'invention a pour objet un procédé de fabrication d'un panneau de garnissage, tel que par exemple un panneau intérieur de porte d'un véhicule, automobile, dans lequel on place des fragments de matériau décoratif de différentes natures ou couleurs par leurs faces correspondant à la face intérieure et visible du panneau contre la paroi d'une matrice, caractérisé en ce qu'en projette ensuite, du côté de la face non visible du panneau, au moins une couche de polyuréthane compact sur les parties de la matrice qui ne sont pas recouvertes par lesdites fragments et sur au moins une partie de ces fragments pour les lier, puis on applique sur cette couche une paroi formant support de garnissage.

Suivant une autre caractéristique de ce procédé, avant ou après application de la paroi formant support de garnissage, on injecte une certaine quantité de polyuréthane liquide sur la couche de polyuréthane compact.

On précisera encore ici que la couche de polyuréthane compact peut être réalisée suivant des projections successives en cachant une ou plusieurs parties de la matrice et éventuellement des fragments de matériau décoratif.

L'invention a encore pour objet un panneau obtenu par le procédé répondant à l'une ou l'autre des caractéristiques précédentes, ce panneau comprenant un ou plusieurs fragments de matériau décoratif tels que moquette, tissu ou analogue, solidaires d'un support, et étant caractérisé par une ou plusieurs couches visibles de polyuréthane compact ou complétant le garnissage constitué par le ou les fragments précités.

Une couche de mousse de polyuréthane peut être interposée entre la couche de polyuréthane compact et éventuellement les fragments de matériau décoratif, et le support précité.

Cette mousse entre le support et la couche de polyuréthane compact ou les fragments de tissu ou de moquette procure non seulement une liaison efficace entre les éléments de garnissage, mais également une sensation de confort pour le passager qui touche ou heurte le garnissage.

On précisera encore ici que le panneau selon cette invention peut comporter des couches de polyuréthane compact d'aspect différent et de couleurs différentes.

Suivant un mode de réalisation particulier, ce panneau peut comporter au moins un fragment de tissu et/ou de moquette et au moins deux couches de polyuréthane compact différentes quant à leurs couleurs ou leur aspect extérieur.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en élévation de la face visible d'un panneau de garnissage formant par exemple une porte de véhicule et réalisé suivant les principes de l'invention.

Les figures 2 et 3 sont respectivement des vues en coupe suivant les lignes II-II et III-III de la figure 1 ; et

La figure 4 est une vue schématique et en coupe d'un moule permettant de réaliser le panneau.

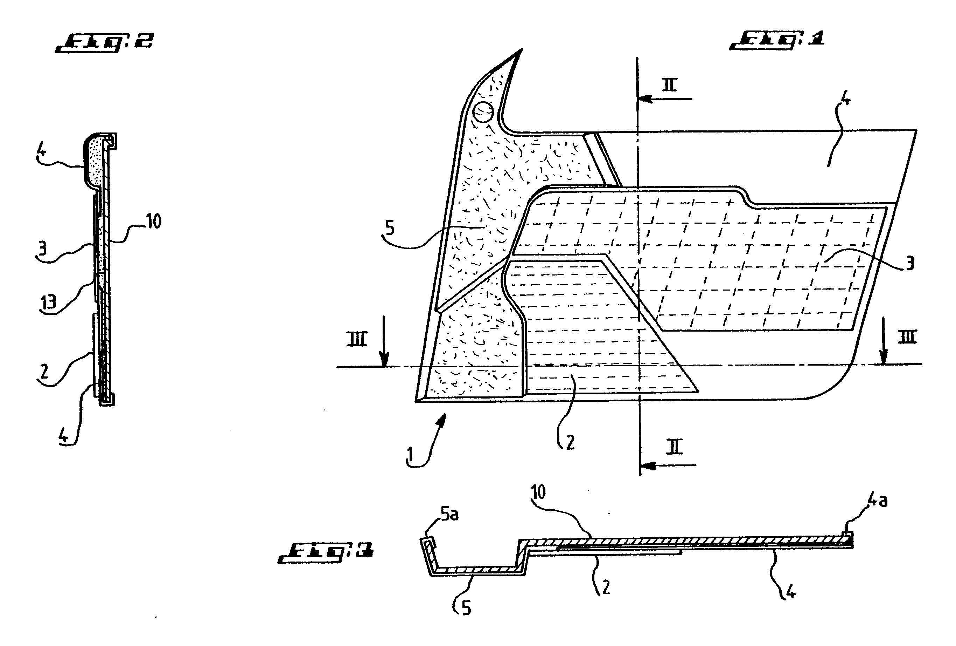

Suivant un exemple de réalisation, et en se reportant à la figure 1, on voit un panneau intérieur 1 de porte d'un véhicule automobile, dont la face intérieure et visible comporte une portion 2 en moquette, une portion 3 en tissu, une portion 4 formant une couche de polyuréthane compact d'une première couleur et une portion 5 formant une couche de polyuréthane compact d'une seconde couleur et dont l'aspect extérieur ou grain peut être différent de la portion 4.

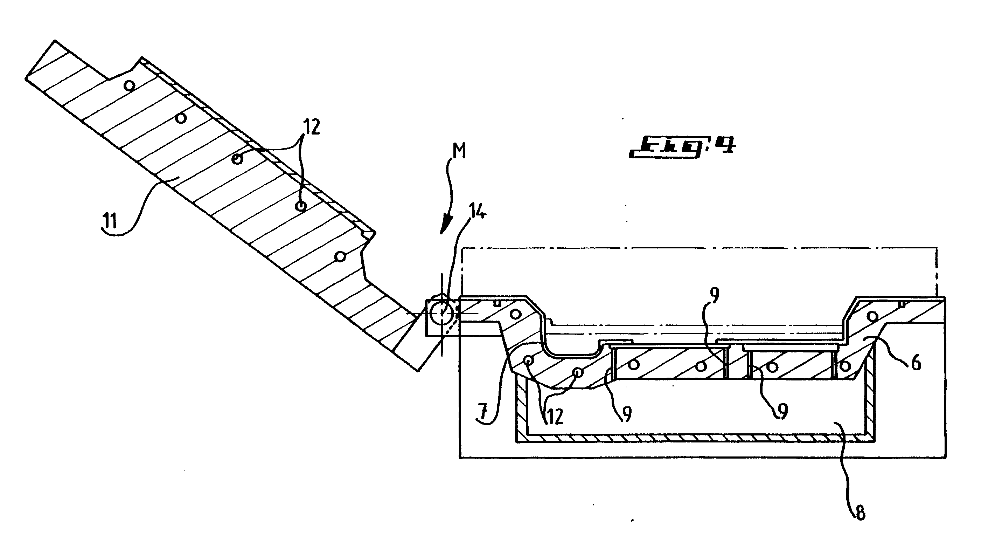

Ce panneau est obtenu, selon l'invention, par le procédé qui sera maintenant décrit en se reportant plus particulièrement à la figure 4.

On utilise un moule M qui comprend une matrice 6 dont la paroi interne 7 reproduit la forme visible du panneau désiré, et qui comprend éventuellement un poinçon 11 articulé en 14 sur ladite matrice.

Cette dernière est équipée d'une chambre de vide 8 reliée à la paroi 7 par des canaux 9.

Des fragments de moquette et/ou de tissu, tels que 2 et 3 sont positionnés sur la matrice 6, de sorte que ces fragments sont maintenus fermement plaqués contre la paroi 7 par le vide.

Ceci étant fait, on dispose un cache sur l'emplacement de la couche de polyuréthane compact de seconde couleur 5, et éventuellement sur l'un des fragments de matériau décoratif, tel que par exemple le fragment de tissu 3. Ce cache peut être en une matière connue sous la dénomination commerciale "Téflon", en silicone ou en aluminium revêtu d'un agent de démoulage.

Puis on projette, à l'aide d'un pistolet, une couche de polyuréthane compact constituant la couche 4 ayant la première couleur et composée de polyol et d'isocyanate.

Ensuite, on enlève le cache de façon à réaliser de la même manière et par projection la couche 5 de polyuréthane compact possèdant la deuxième couleur, laquelle couche peut empiéter sur le pourtour de la couche de première couleur 4, et cela sans inconvénient, puisqu'elle est située sur la face non visible du panneau 1. On comprend donc que la couche de polyuréthane compact sert à la fois pour le décor et pour lier la moquette et le tissu.

On applique ensuite une paroi ou support 10, visible sur les figures 2 et 3, sur la matrice 6. Cette paroi 10 peut être constituée par exemple par de la fibre de bois comprimé ou par une plaque de matériau thermoplastique injecté ou thermoformé, et le collage de cette paroi 10 se fait directement sur la couche de polyuréthane compact 4, 5 fraîchement déposée. C'est ce que l'on voit sur la figure 3. Il est à noter ici que le bord 4a ou 5a de la couche 4 ou 5 peut être rabattu sur le bord du support ou paroi 10, comme on le voit sur ladite figure.

Il est possible, bien que cela ne soit nullement obligatoire, d'injecter, après application de la couche 4, 5, une certaine quantité de polyuréthane liquide, ce après quoi on applique la paroi ou support 10 en rabattant le poinçon 11.

Après application de ce poinçon 11 sur la paroi 10, on chauffe le moule M grâce à un circuit de chauffage montré schématiquement en 12 sur la figure 4 et dans lequel circule de l'eau ou de l'huile chaude, et cela suivant un temps nécessaire à la cuisson du polyuréthane qui forme une mousse 13, comme on le voit sur la figure 2. On voit bien sur cette figure que la mousse 13 forme une couche interposée entre le support 10 et l'ensemble constitué par la couche de polyuréthane compact de première couleur 4 qui recouvre au moins en partie le fragment de moquette 2, et le fragment de tissu 3. Là encore, comme expliqué précédemment, comme on le voit bien sur la figure 2, le bord de la couche de polyuréthane compact peut être rabattu sur le bord du support 10.

Bien entendu, le polyuréthane liquide formant la mousse 13 pourrait être injecté, non pas avant application du support 10, mais après application de ce support à l'aide du poinçon 11, sans pour cela sortir du cadre de l'invention.

On a donc réalisé suivant cette invention un panneau garni en une seule pièce comportant des fragments de matériaux très divers, ce panneau pouvant être obtenu très rapidement, pour un prix de revient très bas et pouvant comporter des motifs décoratifs suivant un nombre quelconque afin de créer un effet de style quelconque.

C'est ainsi que la paroi interne 7 de la matrice 6 peut être soit lisse, soit comporter tout grain choisi en fonction de l'effet que l'on désire obtenir.

Bien entendu, l'invention n'est nullement limitée au mode de réalisation décrit et illustré qui n'a été donné qu'à titre d'exemple.

C'est ainsi que la nature, le nombre et la couleur des matériaux constituant la face visible du panneau peuvent être quelconques.

## Revendications

1. Procédé de fabrication d'un panneau de garnissage, tel que par exemple un panneau intérieur de porte d'un véhicule automobile, dans lequel on place des fragments de matériau décoratif de différentes natures ou couleurs par leurs faces correspondant à la face intérieure et visible du panneau contre la paroi d'une matrice, caractérisé en ce qu'en projette ensuite, du côté de la face non visible du panneau, au moins une couche de polyuréthane compact sur les parties de la matrice qui ne sont pas recouvertes par lesdites fragments et sur au moins une partie de ces fragments pour les lier, puis on applique sur cette couche une paroi formant support de garnissage.

2. Procédé selon la revendication 1, caractérisé en ce qu'avant ou après application de la paroi formant support de garnissage, on injecte une certaine quantité de polyuréthane liquide sur la couche de polyuréthane compact.

3. Procédé selon la revendication 1 ou 2, caractérisé en ce que la couche de polyuréthane compact est réalisée suivant des projections successives en cachant une ou plusieurs parties de la matrice et éventuellement des fragments de matériau décoratif.

4. Pannneau obtenu par le procédé selon l'une des revendications 1 à 3 et du type comprenant un ou plusieurs fragments (2,3) de matériau décoratif tel que moquette, tissu ou analogue solidaires d'un support (10), caractérisé par une ou plusieurs couches visibles (4,5) de polyuréthane compact et complétant le garnissage constitué par le ou les fragments précités.

5. Panneau selon la revendication 4, caractérisé par une couche de mousse de polyuréthane (13) interposée entre la couche de polyuréthane compact et éventuellement les fragments de matériau décoratif, et le support précité (10)

6. Panneau selon la revendication 4 ou 5, caractérisé en ce qu'il comporte des couches de polyuréthane compact (4,5) d'aspect différent et de couleurs différentes.

7. Panneau selon l'une des revendications 4 à 6, caractérisé en ce qu'il comprend au moins un fragment de tissu (3) et/ou de moquette (2) et au moins deux couches de polyuréthane compact (4, 5) différentes quant à leur couleur ou leur aspect extérieur.

## Claims

1. Method of manufacturing a facing panel such for instance as an inner panel of a door of an automotive vehicle, in which one places fragments of ornamental material of different natures or colors with their faces corresponding to the inner and visible face of the panel against the wall of a die, characterized in that one then projects towards the non-visible face of the panel at least one layer of compact polyurethane onto those portions of the die which are not covered by the said fragments and onto at least one part of these fragments to bond them and one then applies onto this layer a wall forming a lining backing.

2. Method according to claim 1, characterized in that before or after the applying of the wall forming a lining backing one injects a certain amount of liquid polyurethane onto the layer of compact polyurethane.

3. Method according to claim 1 or 2, characterized in that the layer of compact polyurethane is provided through successive projections upon concealing one or several portions of the die and possibly of the fragments of ornamental material.

4. Panel obtained by the method according to one of claims 1 to 3 and of the type comprising one or several fragments (2,3) of ornamental material such as moquette, fabric or the like made fast to a support (10), characterized by one or several visible layers (4,5) of compact polyurethane completing the lining constituted by the aforesaid fragment(s).

5. Panel according to claim 4, characterized by a layer of polyurethane foam (13) interposed between the layer of compact polyurethane and possibly the fragments of ornamental material and the aforesaid support (10).

6. Panel according to claim 4 or 5, characterized in that it comprises layers of compact polyurethane (4,5) of differing appearances and of differing colors.

7. Panel according to one of claims 4 to 6, characterized in that it comprises at least one fragment of fabric (3) and/or of moquette (2) and at least two layers of compact polyurethane (4,5) different as to their color or to their external appearance.

## Patentansprüche

1. Verfahren zur Herstellung einer Verkleidungsplatte wie z.B. einer Innenplatte einer Tür eines Kraftfahrzeugs, bei welchem man Bruchstücke verschiedener Arten oder Farben eines Zierwerkstoffs mit ihren der sichtbaren Innenseite der Platte entsprechenden Seiten an die Wandung einer Matrize setzt, dadurch gekennzeichnet, dass man dann zur nicht sichtbaren Seite hin der Platte wenigstens eine Schicht aus kompaktem Polyurethan auf diejenigen Teile der Matrize, die nicht von den besagten Bruchstücken abgedeckt sind und auf wenigstens einen Teil dieser Bruchstücke um diese zu binden aufspritzt und man nacher eine einen Verkleidungsträger bildende Wandung auf diese Schicht aufsetzt.

2. Verfahren nach Anspruch 1, dadurch gekennzeichnet, dass vor oder nach dem Aufsetzen der einen Verkleidungsträger bildenden Wandung, man eine gewisse Menge flüssigen Polyurethan auf die Schicht aus kompaktem Polyurethan aufspritzt.

3. Verfahren nach Anspruch 1 oder 2, dadurch gekennzeichnet, dass die Schicht aus kompaktem Polyurethan durch aufeinanderfolgende Spritzungen unter Verdeckung eines Teils oder mehrerer Teile der Matrize und gegebenenfalls der Bruchstüche aus Zierwerkstoff hergestellt wird.

4. Durch das Verfahren gemäss einem der Ansprüche 1 bis 3 hergestellte Platte, derjenigen Gattung, die ein Bruchstück oder mehrere Bruchstücke (2,3) aus Zierwerkstoff wie Mokett, das bzw. die mit einem Träger (10) fest verbunden ist bzw. sind, aufweist, gekennzeichnet durch eine oder mehrere sichtbare Schichten (4,5) aus kompaktem Polyurethan, die durch das oder die vorgenannte(n) Bruchstück(e) gebildete Verkleidung ergänzen.

5. Platte gemäss Anspruch 4, gekennzeichnet durch eine, zwischen der Schicht aus kompaktem Polyurethan und gegebenenfalls den Bruchstücken aus Zierwerkstoff und dem vorgenannten Träger (10) zwischengeschaltete Schicht aus Polyurethanschaum (13).

6. Platte nach Anspruch 4 oder 5, dadurch gekennzeichnet, dass sie Schichten aus kompaktem Polyurethan (4,5) mit unterschiedlichem Aussehen und verschiedenen Farben aufweist.

7. Platte nach einem der Ansprüche 4 bis 6, dadurch gekennzeichnet, dass sie wenigstens ein Bruchstück aus Gewebe (3) und/oder aus Mokett (2) und wenigstens zwei Schichten aus kompaktem Polyurethan (4,5), die bezüglich ihrer Farbe oder ihrem äusseren Aussehen unterschiedlich sind, umfasst.

EP 0 265 313 B1

Fig. 3

Fig. 1

Fig. 2

Fig. 4